Europäisches Patentamt

European Patent Office

Office européen des brevets

(11) Veröffentlichungsnummer: **0 222 112**
**B1**

(12) **EUROPÄISCHE PATENTSCHRIFT**

(45) Veröffentlichungstag der Patentschrift:
**05.12.90**

(51) Int. Cl.⁵: **H02G 1/12**

(21) Anmeldenummer: **86112923.7**

(22) Anmeldetag: **18.09.86**

(54) **Vorrichtung zum Abisolieren von Kabeln.**

(30) Priorität: **17.10.85 DE 3536960**

(43) Veröffentlichungstag der Anmeldung:
**20.05.87 Patentblatt 87/21**

(45) Bekanntmachung des Hinweises auf die Patenterteilung:
**05.12.90 Patentblatt 90/49**

(84) Benannte Vertragsstaaten:
**AT BE CH DE FR GB IT LI NL**

(56) Entgegenhaltungen:
**DE-A- 3 416 715**
**US-A- 2 120 398**
**US-A- 3 710 654**

(73) Patentinhaber: **ANT Nachrichtentechnik GmbH,
Gerberstrasse 33, D-7150 Backnang(DE)**
Patentinhaber: **Wezag GmbH, Wittigstrasse 8,
D-3570 Stadtallendorf(DE)**

(72) Erfinder: **Rommel, Reiner, WEZAG Wittigstrasse 8,
D-3570 Stadtallendorf(DE)**
Erfinder: **Dyck, Claus, Dipl.-Ing., Im Heidewinkel 17,
D-7150 Backnang(DE)**

## Beschreibung

Die Erfindung betrifft eine Vorrichtung gemäß dem Oberbegriff des Patentanspruchs 1. Eine solche Vorrichtung ist bekannt aus US-A 3 710 654.

Beim Abisolieren von Kabeln ist es nicht nur erforderlich, den Kabelmantel – bei Koaxialkabeln auch den Außenmantel und das Dielektrikum – radial einzuschneiden, sondern zum einfachen Entfernen auch längszuschlitzen.

Aus der US-A 3 710 654 ist eine Vorrichtung bekannt, die ein radiales Einschneiden sowie ein Längsschlitzen des Kabelmantels mit ein und derselben Messerklinge erlaubt. In einem Führungsblock ist hierzu eine Bohrung vorgesehen, die senkrecht zur Kabeleinführungsöffnung steht. In dieser Bohrung ist ein zylindrischer Messerhalter mit daran fixiertem Schneidmesser untergebracht. An der Oberseite des Messerhalters ist ein Drehgriff vorgesehen zum Positionieren des Schneidmessers in zwei zueinander senkrecht stehenden Richtungen. Eine Druckfeder drückt auf den Messerhalter in Richtung Kabeleinführungsöffnung. In der DE 3 416 715.3 (veröffentlicht am 7. November 1985) ist eine Vorrichtung vorgeschlagen worden, die auf einfache Weise eine Drehung des Messerhalters erlaubt und mit ein und derselben Messerklinge radiales Einschneiden und Längsschlitzen ermöglicht. Der Messerhalter befindet sich dabei in Richtung Kabeleinführungsöffnung unter Federdruck. Da dieser Federdruck oft sehr stark ist, kann es Schwierigkeiten bereiten, den Messerhalter gegen den Federdruck nach oben zu bewegen und damit die Kabeleinführungsöffnung zum Herausziehen des abisolierten Kabels freizugeben.

Der Erfindung liegt daher die Aufgabe zugrunde, die Vorrichtung gemäß dem Oberbegriff des Patentanspruchs 1 so auszugestalten, daß der Messerhalter samt Schneidmesser gegen den Federdruck leicht nach oben gezogen werden kann und damit die Kabeleinführungsöffnung freigibt.

Diese Aufgabe wird durch die kennzeichnenden Merkmale des Patentanspruchs 1 gelöst. Die Unteransprüche zeigen vorteilhafte Ausgestaltungen bzw. Weiterbildungen auf. Die Vorrichtung gemäß der Erfindung besitzt folgende Vorteile: Durch das einfache Anheben des Messerhalters mit Schneidmesser vermittels Niederdrücken des Hebels kann das abzuisolierende Kabel leicht in die Kabeleinführungsöffnung geschoben werden und auch nach der Bearbeitung wieder leicht herausgezogen werden.

Durch Mittel zur Mehrfach-Tiefenverstellung des Messers kann ein gestuftes Abisolieren mit dem gleichen Werkzeug erfolgen, was insbesondere die Bearbeitung von Koaxialkabeln sehr erleichtert. Außerdem können Kabel insbesondere auch Koaxialkabel mit verschiedenem Durchmesser und/oder verschiedener Absetztiefe mit dem gleichen Werkzeug bearbeitet werden. Es muß dazu lediglich der Schneidzylinder gegen einen anderen mit anderer Tiefe der Rastnuten ausgewechselt werden. Durch einen verschiebbaren und arretierbaren Anschlag in der Kabeleinführungsöffnung können verschiedene Absetzlängen eingestellt werden.

Anhand der Zeichnungen wird nun die Erfindung näher erläutert. Es zeigen:

Fig. 1 die Vorrichtung in einer Seitenansicht,
Fig. 2 den Schneidzylinder in einer Draufsicht,
Fig. 3a bis 3c verschiedene Stellungen des Drehgriffs bezüglich Führungskörper.

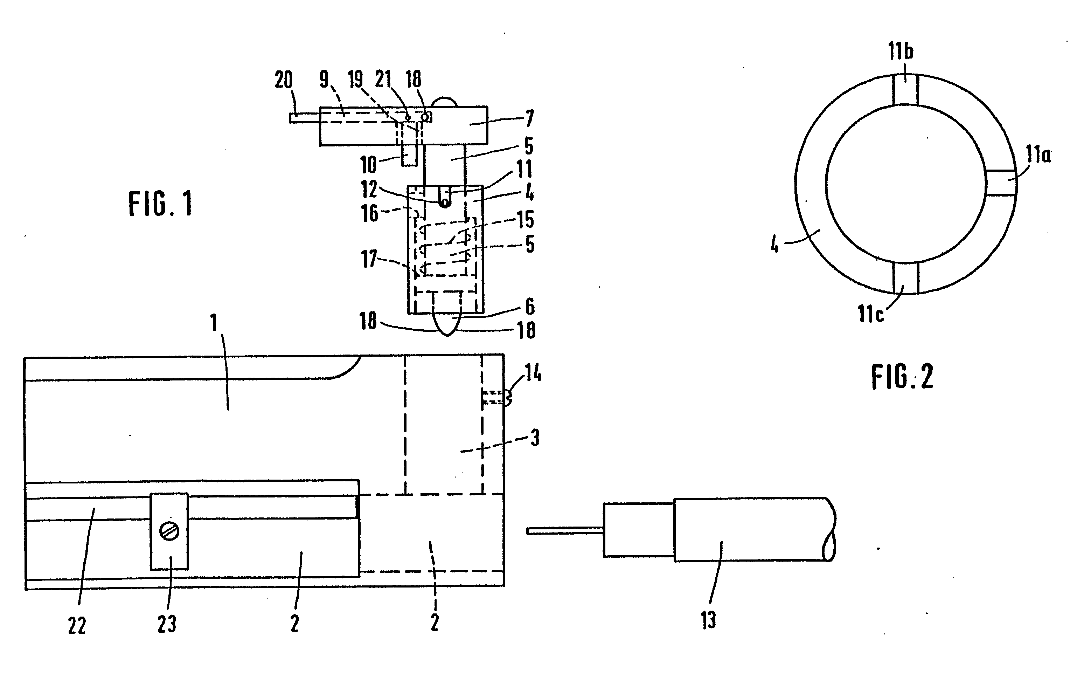

Wie die Figur 1 zeigt, besteht die Vorrichtung zum Abisolieren von Kabeln - insbesondere Koaxialkabeln - aus einem Führungsblock 1 mit einer Kabeleinführungsöffnung 2, welche als Durchgangsloch im unteren Bereich und parallel zu den Längskanten des Führungsblocks angeordnet ist. Im vorderen Bereich des Führungsblocks 1 befindet sich ein zylindrischer Messerschacht 3, welcher senkrecht zur Kabeleinführungsöffnung angeordnet ist. Der Messerschacht 3 verläuft von der oberen Schmalseite des Führungsblocks 1 ausgehend bis zur Kabeleinführungsöffnung 2. Der Messerschacht 3 dient zur Aufnahme eines ebenfalls zylindrischen Schneidzylinders 4.

Dieser Schneidzylinder 4 ist in Fig. 1 ebenfalls in Seitenansicht und in Fig. 2 in einer Draufsicht dargestellt. Der Schneidzylinder 4, der in Fig. 1 zusammen mit Messerhalter 5 und Drehgriff 7 über dem Führungsblock separat dargestellt ist, kann mittels einer Schraube 14 im Führungsblock 1 fixiert werden. Der Schneidzylinder 4 weist ein konzentrisches Durchgangsloch auf, welches den zylindrischen Messerhalter 5 sowie eine Feder 15 aufnimmt. Die Feder 15 liegt zwischen einem Anschlag 16 des Schneidzylinders 4 und einem Anschlag 17 des Messerhalters 5, und drückt dadurch den Messerhalter 5 sowie das an seinem unteren Ende befestigte Schneidmesser 6 nach unten in Richtung Kabeleinführungsöffnung 2. Das Schneidmesser besteht aus einer im wesentlichen flächenhaften Klinge mit zwei Schneidkanten 18, die ergonomisch gestaltet sind und bezüglich der Mittelachse des Messerhalters 5 spitz nach unten aufeinander zulaufen. Am Messerhalter 5 ist im oberen Drittel ein bezüglich seinem Außenmantel senkrecht nach außen ragender Stift 12 angebracht. Dieser Stift 12 rastet unter dem Federdruck der Feder 15 beim Drehen des am oberen Ende des Messerhalters 5 angebrachten Drehgriffes 7 in eine der an der oberen Stirnflanke des Schneidzylinders 4 angebrachten radial verlaufenden Rastnuten 11 ein.

Die Rastnuten 11 besitzen verschiedene Tiefen, so daß je nach Stellung des Drehgriffs 7 der Stift 12 in tiefe oder weniger tiefe Rastnuten einrastet.

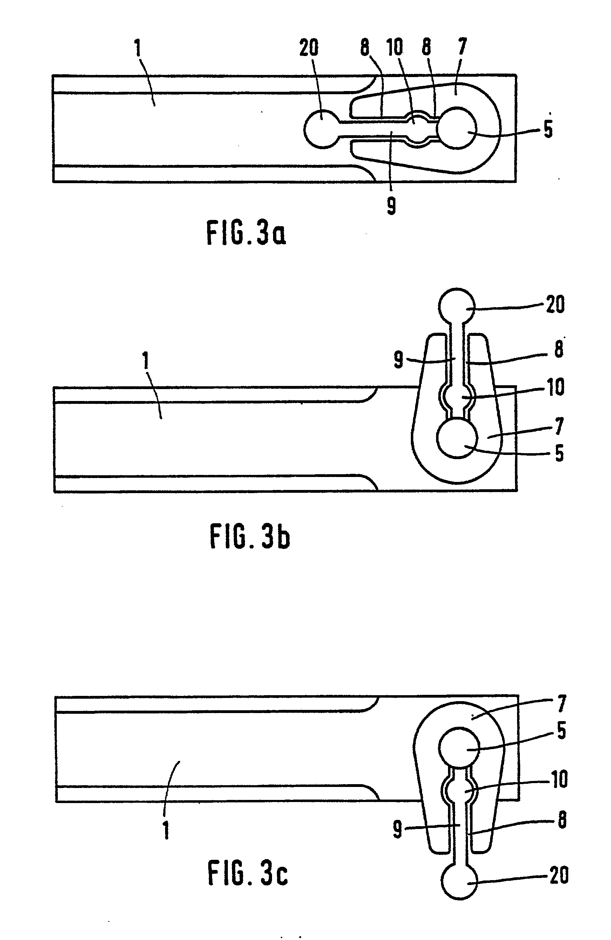

Die verschiedenen Stellungen des Drehgriffs 7 bezüglich des Führungsblocks 1 sind in den Figuren 3a bis 3c dargestellt. In Figur 3a steht der Drehgriff 7 parallel zur oberen Schmalseite das Führungsblocks 1.

Der Stift 12 ist dann in der Rastnut 11a (Fig. 2) mit der geringsten Tiefe eingerastet. Die Klinge des Schneidmessers 6 steht parallel zur Kabeleinführungsöffnung 2 und ermöglicht das Längsschlitzen des Kabelmantels eines Koaxialkabels 13.

In Figur 3b steht der Drehgriff 7 bezüglich des Führungsblocks 1 nach hinten und wurde also bezüglich der vorigen Stellung um 90° gedreht. Der Stift 12 ist

in der Rastnut 11b (Fig. 2) eingerastet, die die gleiche Tiefe wie die Rastnut 11a aufweist. Die Klinge des Schneidmessers 6 steht nun quer zur Kabeleinführungsöffnung 2 und ermöglicht ein radiales Durchschneiden des Koaxialkabelmantels durch Drehen des Führungsblocks 1 um das Kabel 13.

In Fig. 3c steht der Drehgriff 7 nach vorne; die Klinge des Schneidmessers 6 steht wieder quer zur Kabeleinführungsöffnung 2. Der Stift 12 ist jedoch nun in der Rastnut 11c (Fig. 2) eingerastet, die tiefer ist als die Rastnuten 11a und 11b. Dadurch ragt die Klinge des Schneidmessers 6 unter dem Federdruck der Feder 15 tiefer in die Kabeleinführungsöffnung und ermöglicht durch Drehen des Führungsblocks 1 um das Koaxialkabel 13 das Durchschneiden des Koaxialkabelaußenleiters samt Dielektrikum. Da die Feder 15 sehr stark sein muß - sie darf insbesondere unter dem Widerstand des Kabels 13 nicht nach oben ausweichen - ist das Anheben des Messerhalters 5 samt Schneidmesser 6 zur Freigabe der Kabeleinführungsöffnung 2 schwer realisierbar. Erfindungsgemäß wird dieses Problem dadurch gelöst, daß Mittel zum einfachen und kraftunaufwendigen Anheben des Messerhalters 5 vorgesehen sind. Diese Mittel bestehen aus einem zusätzlichen Hebel 9, der in einer Nut 8 des Drehgriffs 7 geführt ist. Der Hebel 9 ist an einem Ende mit einer im Drehgriff 7 befestigten Drehachse 18 versehen, die ein Auf- und Abwärtsbewegen des Hebels 9 senkrecht zur Nut 8 gestattet. Kurz hinter der Drehachse 18 weist der Hebel 9 einen nach unten gerichteten Vorsprung 10 auf. Im Bereich dieses Vorsprungs 10 - im in Fig. 1 gezeigten Ausführungsbeispiel aus einem Stift bestehend - weist der Drehgriff 7 eine Aussparung 19 auf, so daß der Vorsprung 10 den Drehgriff 7 durchdringen kann und bei Herunterdrücken des Hebels 9 an dem den Drehgriff 7 überstehenden Ende 20 auf dem Schneidzylinder 4 oder dem Führungsblock 1 aufstehen kann. Sobald der Hebel 9 nach dem Aufstehen des Vorsprungs 10 auf Führungsblock 1 oder Schneidzylinder 4 noch weiter nach unten gedrückt wird, befindet sich der Drehpunkt des Hebels 9 nicht mehr bei der Drehachse 18, sondern über dem Vorsprung 10 (Bezugszeichen 21 in Fig. 1). Der Messerhalter 5 samt Schneidmesser 6 wird daher beim weiteren Niederdrücken des Hebels 9 gegen den Federdruck der Feder 15 angehoben und gibt die Kabeleinführungsöffnung 2 vom Schneidmesser 6 frei. Der Kraftaufwand zum Anheben des Messerhalters 5 gegen den Federdruck der Feder 15 ist sehr gering, da der Hebelalarm des Hebels 9 zwischen Drehpunkt 21 und das den Drehgriff 7 überstehende Ende 20 sehr viel länger ist als der Hebelarm zwischen Drehpunkt 21 und Drehachse 18.

Die Vorrichtung ist zur Bearbeitung von Kabel 13 mit unterschiedlichem Durchmesser und/oder unterschiedlicher Absetztiefe einsetzbar. Hierzu ist lediglich der Schneidzylinder 4 gegen einen anderen auszutauschen, der Rastnuten 11 anderer Tiefen aufweist. Durch die anderen Tiefen der Rastnuten 11 ändert sich die Schnittiefe für das radiale Einschneiden und Längsschlitzen.

Zur Einstellung verschiedener Absetzlängen ist der Führungsblock 1 im hinteren Bereich der Kabeleinführungsöffnung 2 aufgeschnitten. Ein längs einer Schiene 22 verschiebbarer und arretierbarer Anschlag 23 legt dabei die Einschubtiefe des Kabels 13 fest. Für Koaxialkabel 13 können auch mehrere solcher Anschläge 23 vorgesehen werden, um sowohl die Absetzlänge für den Innenleiter und den Außenleiter voreinzustellen.

## Patentansprüche

1. Vorrichtung zum Abisolieren von Kabeln bestehend aus:
   - einem Führungsblock (1) mit einer Kabeleinführungsöffnung (2) für das abzuisolierende Kabel,
   - einer senkrecht zur Kabeleinführungsöffnung stehenden Bohrung (3),
   - einem zylindrischen Messerhalter (5),
   - einem im Messerhalter (5) fixierten Schneidmesser (6),
   - einer Druckfeder (15), die auf den Messerhalter (5) drückt,
   - einem Drehgriff (7) an der Oberseite des Messerhalters (5) zur Einstellung des Messerhalters (5), gekennzeichnet durch
   - einen in der Bohrung (3) fixierten Schneidzylinder (4), welcher die Druckfeder (15) und den Messerhalter (5) aufnimmt,
   - einen in einer Nut (8) auf der Oberseite des Drehgriffs (7) geführten Hebel (9), an dessen Unterseite ein in Richtung Führungsblock (1) weisender und den Drehgriff (7) durchdringen der Vorsprung (10) angebracht ist derart, daß beim Niederdrücken des Hebels (9) der Messerhalter (5) samt Schneidmesser (6) gegen den Federdruck nach oben gezogen wird.

2. Vorrichtung nach Anspruch 1, dadurch gekennzeichnet, daß zur Mehrfach-Tiefenverstellung des Messerhalters (5)
   - im Schneidzylinder (4) Rastnuten (11) verschiedener Tiefe vorgesehen sind,
   - im Messerhalter (5) mindestens ein von dessen Außenmantel senkrecht nach außen ragender Stift (12) angebracht ist, der derart angeordnet ist, daß er beim Drehen des unter dem Federdruck geführten Messerhalters (5) jeweils in eine der Rastnuten (11) einrastet.

3. Vorrichtung nach Anspruch 1 oder 2, dadurch gekennzeichnet, daß der Vorsprung (10) an der Unterseite des Hebels (9) derart angeordnet ist, daß er beim Niederdrücken desselben auf dem Führungsblock (1) aufsteht.

4. Vorrichtung nach Anspruch 1 oder 2, dadurch gekennzeichnet, daß der Vorsprung (10) an der Unterseite des Hebels (9) derart angeordnet ist, daß er beim Niederdrücken desselben auf dem Schneidzylinder (4) aufsteht.

5. Vorrichtung nach einem der Ansprüche 1 bis 4, gekennzeichnet durch einen verschiebbaren und arretierbaren Anschlag (23) in der Kabeleinführungsöffnung (2) zur Einstellung verschiedener Absetzlängen.

6. Vorrichtung nach einem der Ansprüche 2 bis 5, dadurch gekennzeichnet, daß zur Bearbeitung von Kabeln unterschiedlichen Durchmessers und/oder unterschiedlicher Absetztiefe jeweils ein anderer Schneidzylinder (4) mit anderen Tiefen für die Rastnuten (11) einsetzbar ist.

**Claims**

1. An apparatus for stripping insulation from cables, comprising:
   - a guide block (1) having a cable introduction opening (2) for the cable to be stripped;
   - a bore (3) which is disposed perpendicular to the cable introduction opening;
   - a cylindrical blade holder (5);
   - a cutting blade (6) fixed in the blade holder (5);
   - a compression spring (15) which presses onto the blade holder (5);
   - a turning handle (7) disposed on the top face of the blade holder (5) for positioning the blade holder (5); characterised by
   - a cutting cylinder (4) fixed in the bore (3) so as to accommodate the compression spring (15) and the blade holder (5);
   - a lever (9) guided in a groove (8) on the top of the turning handle (7), with a protrusion (10) oriented in the direction of the guide block (1) and penetrating the turning handle (7) being attached on the underside of the lever, so that depression of the lever (9) causes the blade holder (5) together with the cutting blade (6) to be pulled upward against the pressure of the spring.

2. An apparatus according to claim 1, characterised in that for adjusting the blade holder (5) to multiple depths,
   - detent grooves (11) of varying depths are provided in the cutting cylinder (4);
   - at least one pin (12) protruding perpendicularly outward from the outer periphery of the blade holder is disposed in the blade holder (5) in such a manner that, upon rotation of the spring pressure guided blade holder (5), the pin snaps into a respective one of the detent grooves (11).

3. An apparatus according to claim 1 or 2, characterised in that the protrusion (10) is disposed on the underside of the lever (9) in such a way that depression of the lever causes the protrusion to be supported on the guide block (1).

4. An apparatus according to claim 1 or 2, characterised in that the protrusion (10) is disposed on the underside of the lever (9) in such a way that depression of the lever causes the protrusion to be supported on the cutting cylinder (4).

5. An apparatus according to one of claims 1 to 4, characterised by a displaceable and lockable stop (23) in the cable introduction opening (2) for setting various offset lengths.

6. An apparatus according to one of claims 2 to 5, characterised in that, for working cables of different diameters and/or different offset depths, a respectively different cutting cylinder (4) having different depths for the detent grooves (11) can be employed.

**Revendications**

1. Dispositif de dénudage de câbles, constitué par:
   - un bloc de guidage (1) avec une ouverture (2) pour l'introduction du câble à dénuder;
   - un trou (3) perpendiculaire à l'ouverture d'introduction du câble;
   - un porte-couteau cylindrique (5);
   - un ressort de compression (15) poussant le porte-couteau (5);
   - une poignée tournante (7) sur le côté supérieur du porte-couteau (5), pour régler le porte-couteau (5), caractérisé par
   - un cylindre de coupe (4) qui est fixé dans le trou (3) et qui reçoit le ressort de compression (15) et le porte-couteau (5);
   - un levier (9) guidé dans une rainure (8) sur le côté supérieur de la poignée tournante (7), levier sur le côté dessous duquel est agencé un saillant (10) dirigé vers le bloc de guidage (1) et traversant la poignée tournante (7), de manière que le porte-couteau (5) avec couteau (6) soit tiré vers le haut, contre la poussée du ressort, lors de l'enfoncement du levier (9).

2. Dispositif selon revendication 1, caractérisé par le fait que, pour obtenir plusieurs réglages de profondeur du porte-couteau (5),
   - des rainures d'arrêt (11) ayant des profondeurs différentes sont prévues dans le cylindre de coupe (4);
   - au moins un téton (12) saillant vers l'extérieur, perpendiculairement à la périphérie du porte-couteau (5) est agencé sur ce dernier, de manière à s'engager dans l'une des rainures d'arrêt (11) à chaque fois que l'on fait tourner le porte-couteau (5) guidé en étant soumis à la poussée du ressort.

3. Dispositif selon revendication 1 ou 2, caractérisé par le fait que le saillant (10) est agencé sur le côté dessous du levier (9), de manière à s'appliquer sur le bloc de guidage (1) lorsqu'on pousse ledit levier vers le bas.

4. Dispositif selon revendication 1 ou 2, caractérisé par le fait que le saillant (10) est agencé sur le côté dessous du levier (9) de manière à s'appliquer sur le cylindre de coupe (4) lorsqu'on pousse ledit levier vers le bas.

5. Dispositif selon l'une des revendications 1 à 4, caractérisé par une butée (23), mobile en translation et pouvant être arrêtée, dans l'ouverture (2) d'introduction du câble, afin d'établir différentes longueurs de dénudage.

6. Dispositif selon l'une des revendications 2 à 5, caractérisé par le fait que, pour opérer sur des câbles de différents diamètres et/ou différentes profondeurs de dénudage, un autre cylindre de coupe (4), ayant des rainures d'arrêt (11) dotées d'autres profondeurs, peut être utilisé dans chaque cas.

FIG. 1

FIG. 2

EP 0 222 112 B1

FIG. 3a

FIG. 3b

FIG. 3c